# EUROPEAN PATENT APPLICATION

(11) **EP 2 634 901 A1**
(43) Date of publication of application: **04.09.2013**
(21) Application number: 12425044.0
(22) Date of filing: 28.02.2012
(51) Int. Cl.: H02M 3/158

(54) **Configurable integrated two channel buck converter device**

(71) Applicant: ST-Ericsson SA, 1228 Genève (CH)
(72) Inventor: Seminara, Maria Francesca, 95125 Catania (IT); Musumeci, Salvatore Rosario, 95013 Fiumefreddo di Sicilia, Catania (IT); Pignolo, Philippe, 38920 Crolles (FR)
(74) Representative: Carangelo, Pierluigi

(57) **Abstract**

The present disclosure relates to a buck converter device (100) comprising a buck converter integrated chip (10) comprising first and second input terminals (IN1, IN2) adapted to receive first and second voltages (Vref1, Vref2) to be regulated, first and second output terminals (OU1, OU2) and a discrete component electronic circuit 30 interposed between said first and second output terminals (OU1, OU2) of the buck converter integrated chip and a load (Z). The discrete component electronic circuit (30) assumes at least one operative configuration to provide the load (Z) with the regulated voltage. The buck converter integrated chip (10) further comprises: first and second buck converter branches (SD1, SD2) comprising each a core section (COR1, COR2) and a power section (PWR1, PWR2) connected to the corresponding output terminal (OU1, OU2). The buck converter integrated chip (10) further comprises a control module (20) configured to selectively allow/inhibit the transfer of the references voltages (Vref1, Vref2) to the corresponding buck converter branches (SD1, SD2) on the basis of the receipt of a control signal (I2C). Such control signal is indicative of the at least one operative configuration assumed by the discrete component electronic circuit (30).

## Description

### Technical Field

The present disclosure relates to the field of the buck converters and more in particular concerns a buck converter device.

### Background art

Modern graphics processors (GFX) and application processors (AP) require ever increasing power supplies in order to operate at high switching frequencies. Such graphics processors and application processors are, for example, widely used in smartphones and tablet PCs. In a digital platform of a smartphone or a tablet pc it is well known to provide a power management unit (PMU) adapted to supply, among others circuits, the graphic processor and the application processor.

It is also well known to provide one or more DC-DC buck converters inside the PMU. In more detail, each buck converter comprises a first portion, including both a core section and a power section, as an integrated circuit inside the PMU chip and a second portion, including discrete components of the buck converter, i.e. its coil and capacitor, which is external with respect the PMU chip but has to be as close as possible to the PMU itself. This creates a nested circle of discrete components located around the PMU.

Since the demand of power supply provided by buck converters inside the PMU is increasing for present applications, a user is generally forced to choice the buck converter configuration suitable for the particular application on the basis of the discrete components, particularly the coil, which is external to the PMU. In other words, the external coil is preliminary selected on the basis of the amount of current to be provided to a load. However, for some applications, such choice for the suitable coil could lead to incompatibility with the integrated portion of the buck converter located inside the PMU chip and the physical Printed Circuit Board (PCB) allocated for the discrete component placement.

To overcome such problem, the buck converters located in the PMU should be customized each time in accordance with: the particular application, the user needs and the discrete coil to be used. Such solution would, however, introduce an excessive increase of costs for the silicon maker.

### Summary of the invention

It is an object of the present invention to provide a buck converter device that can be adapted to different applications with reduced costs and with a reduced increase of the design complexity.

The above object is reached by a buck converter device according to independent claim 1. Such buck converter device comprises:
- a buck converter integrated chip 10 comprising a first IN1 and a second IN2 input terminal adapted to receive a first Vref1 and a second Vref2 voltage to be regulated, and a first OU1 and a second OU2 output terminal;
- a discrete component electronic circuit 30 interposed between said first OU1 and second OU2 output terminal of the buck converter integrated chip and a load Z.
   The discrete component electronic circuit 30 assumes at least one operative configuration to provide the load Z with the regulated voltage.
   The buck converter integrated chip 10 further comprises:
- a first buck converter branch SD1 comprising a first core section COR1 and a first power section PWR1 connected to said first output terminal OU1;
- a second buck converter branch SD2 comprising a second core section COR2 and a second power section PWR2 connected to said second output terminal OU2.
   Wherein the buck converter integrated chip 10 further comprises a control module 20 configured to selectively allow/inhibit the transfer of said first Vref1 and second Vref2 voltage to the first SD1 and to the second SD2 buck converter branch on the basis of the receipt of a control signal I2C. Such control signal is indicative of the at least one operative configuration assumed by the discrete component electronic circuit 30.

Further embodiments of the buck converter device are described in the dependent claims.

### Brief description of the drawings

Further features and advantages of the present invention will become more apparent from the following detailed description of exemplary but non-limiting embodiments thereof, as illustrated in the attached figures, in which:
- Fig. 1 shows a schematic block diagram of a buck converter device in a first operative configuration;
- Fig. 2 shows a schematic block diagram of a buck converter device in a second operative configuration;
- Fig. 3 shows a schematic block diagram of a buck converter device in a third operative configuration.

### Detailed description

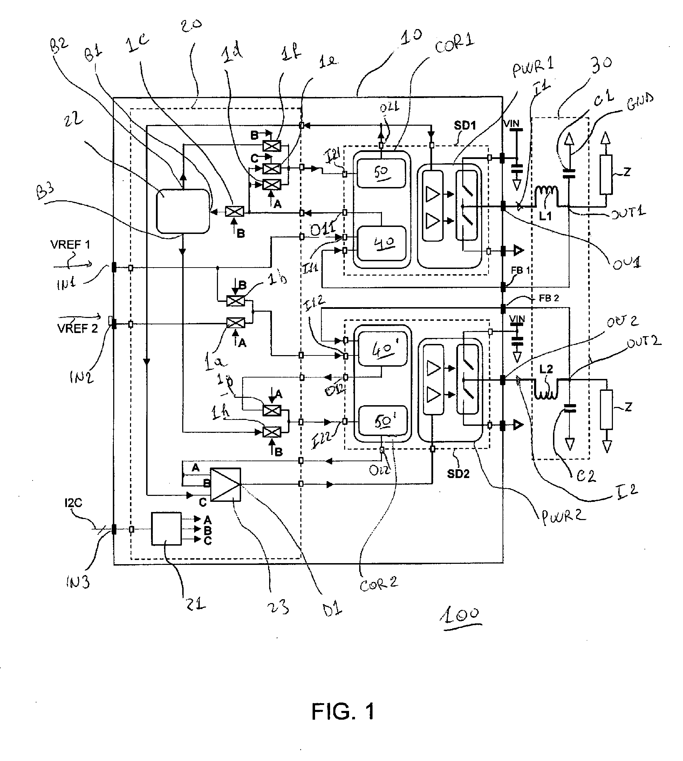

Figures 1, 2, 3 show schematic block diagrams of a buck converter device in accordance with the invention in three different embodiments indicated with reference numbers 100, 200, 300, respectively.

In the attached figures 1-3 similar or identical elements are indicated using the same reference numbers.

According to a preferred embodiment, the buck converter device 100,200,300 of the invention is included in a Power Management Unit (PMU) for an application and/or graphic processor for example of a digital platform of a mobile phone or a tablet PC.

Such buck converter device 100,200,300 comprises a buck converter integrated chip 10 which comprises a first IN1 and a second IN2 input terminal adapted to receive a first Vref1 and a second Vref2 voltage to be regulated, respectively. Such first Vref1 and second Vref2 voltage are reference voltage generated inside the Power Management Unit. Moreover, the buck converter chip 10 comprises a first OU1 and a second OU2 output terminal to be connected to an external load Z.

Particularly, the buck converter device 100,200,300 comprises a discrete component electronic circuit 30 interposed between such first OU1 and second OU2 output terminal of the buck converter chip 10 and the load Z.

The discrete component electronic circuit 30 can assume at least one operative configuration to provide the load Z with the regulated voltage. According to the exemplary embodiments described hereinafter, such discrete component circuit 30 is configured to assume three different operative configurations. Each configuration of the discrete component circuit 30 corresponds to an operative configuration of the whole buck converter device.

The buck converter integrated chip 10 of the buck converter device 100,200,300 further comprises a first SD1 and a second SD2 buck converter branch. The first buck converter branch SD1, namely the upper branch in figures 1-3, comprises a first core section COR1 and a first power section PWR1 connected to the first output terminal OU1. The second buck converter branch SD2, namely the lower branch in figures 1-3, comprises a second core section COR2 and a second power section PWR2 connected to the second output terminal OU2.

Advantageously, the buck converter integrated chip 10 further comprises a control module 20 configured to selectively allow/inhibit the transfer of the first Vref1 and second Vref2 voltage to the first SD1 and to the second SD2 buck converter branch, respectively, on the basis of the receipt of a control signal I2C on a third input terminal IN3 of the chip 10. In more detail, such control signal I2C is indicative of the at least one operative configuration assumed by the discrete component electronic circuit 30. Such control signal is, preferably, a digital signal carried on a digital bus.

With reference to figures 1-3, the first core section COR1 comprises a first analog module 40 configured to receive, through the control module 20, the first voltage Vref1. It is to be noted that the first analog module 40 is also configured to receive a first feedback voltage through a third output terminal FB1 provided in the buck converter chip 10. Such first feedback voltage corresponds to a first output voltage supplied to the load Z.

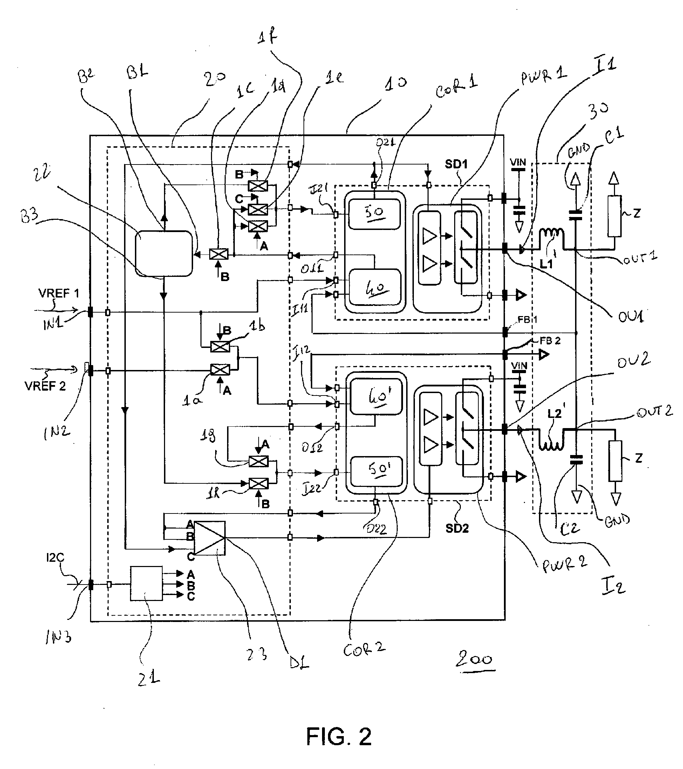

The second core section COR2 comprises a respective second analog module 40' configured to selectively receive, through the control module 20, either the first voltage Vref1 or the second voltage Vref2. The second analog module 40' is configured to receive a second feedback voltage through a fourth output terminal FB2 provided in the buck converter chip 10. With reference to the buck converter device 100 of figure 1, such second feedback voltage corresponds to a second output voltage supplied to the load Z. On the contrary, with reference to the buck converter devices 200, 300 of figures 2-3, such second feedback voltage corresponds to a ground potential GND.

Moreover, with reference to figures 1-3, the first core section COR1 is adapted to directly control the first power section PWR1 for generating a respective first current I1 to be provided to the discrete component electronic circuit 30. Particularly, the first core section COR1 comprises a first PWM module 50 to control such first PWR1 power section by means of a first PWM (Pulse Width Modulated) signal.

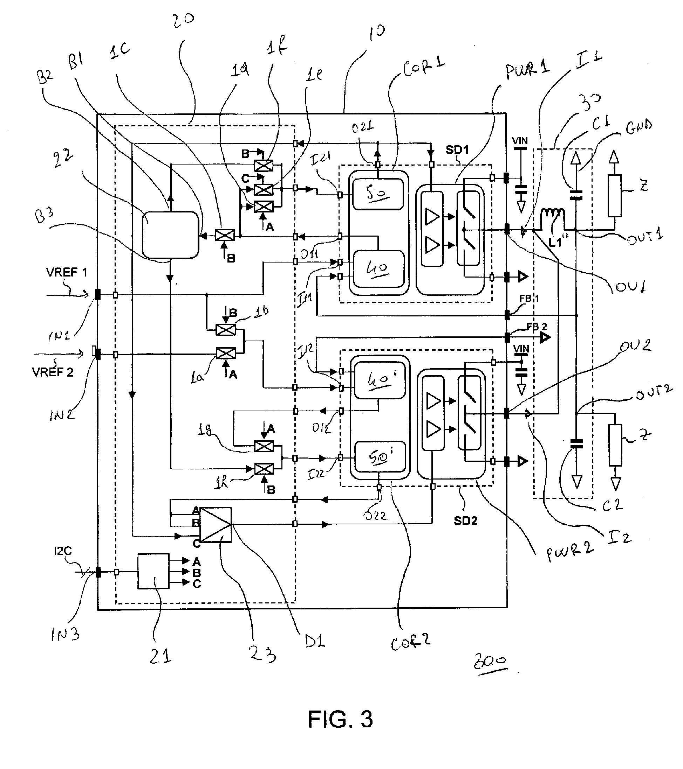

With reference to figures 1-2, the second core section COR2 is adapted to control the second power section PWR2 through the control module 20 for generating a respective second current I2 to be provided to the discrete component electronic circuit 30. Particularly, the second core section COR2 comprises a second PWM module 50' to control the second power section PWR2 by means of a second PWM signal.
With reference to figure 3, the first core section COR1 is adapted to control the second power section PWR2 through the control module 20 for generating such second current I2.

With reference to figure 1, in a first operative configuration of the buck converter device 100, the discrete component electronic circuit 30 comprises a first coil L1 connected between the first output terminal OU1 and a first output node OUT1 of the device 100. The discrete component circuit 30 also comprises a first capacitor C1 connected between such first output node OUT1 and the ground potential GND. A first load Z is connected between the same first output node OUT1 and the ground potential GND.

In addition, the discrete component electronic circuit 30 comprises a second coil L2 connected between the second output terminal OU2 and a second output node OUT2 of the device 100 which is electrically isolated by said first node OUT1.

The discrete component circuit 30 also comprises a second capacitor C2 connected between such second output node OUT2 and the ground potential GND. A second load Z is connected between the same second output node OUT2 and the ground potential GND.

In such first operative configuration of the buck converter device 100, the control module 20 is configured, on the basis of the digital control signal I2C, to allow the transfer of the first voltage Vref1 to the first core section COR1 and the transfer of the second voltage Vref2 to the second core section COR2. Particularly, the first SD1 and second SD2 branch connected, respectively, to the pair first coil L1, first capacitor C1 and to the pair second coil L2, second capacitor C2 form two single buck converters controlled in independent way by the digital control signal I2C.

With reference to figure 2, in a second operative configuration of the buck converter device 200, the discrete component electronic circuit 30 comprises a first coil L1' connected between the first output terminal OU1 and the first output node OUT1 of the device 200. The discrete component circuit 30 also comprises the first capacitor C1 connected between such first output node OUT1 and the ground potential GND.

Moreover, the discrete component electronic circuit 30 comprises a second coil L2' connected between the second output terminal OU2 and the second output node OUT2 of the device 200. Such second output node OUT2 is electrically connected to the first output node OUT1. The overall load Z is connected between the same first output node OUT1 and the ground potential GND.

The discrete component circuit 30 also comprises the second capacitor C2 connected between the second output node OUT2 and the ground potential GND.

In such second operative configuration of the buck converter device 200, the control module 20 is configured, on the basis of the digital control signal I2C, to allow the transfer of the first voltage Vref1 both to the first core section COR1 and to the second core section COR2. In this case, the transfer of the second voltage Vref2 is inhibited.

Particularly, the first SD1 and second SD2 branch connected, respectively, to the pairs first coil L1', first capacitor C1 and second coil L2', second capacitor C2 represent a multiphase buck converter controlled as dual phase buck converter by the digital control signal I2C.

With reference to figure 3, in a third operative configuration of the buck converter device 300, the discrete component electronic circuit 30 comprises a coil L1" connected between the first output terminal OU1 and the first output node OUT1 of the device 300. In this case, the second output terminal OU2 is electrically connected (short-circuited) to the first output terminal OU1, and the second output node OUT2 of the device 300 is electrically connected to the first node OUT1. The overall load Z is connected between the same first output node OUT1 and the ground potential GND.

The discrete component circuit 30 also comprises first C1 and second C2 capacitors connected between the first output node OUT1 and the ground potential GND.

In such third operative configuration of the buck converter device 300, the control module 20 is configured to allow the transfer of the first voltage Vref1 to the first core section COR1. On the basis of such first voltage Vref1, the first core section COR1 drives both the first power section PWR1 and the second power section PWR2 of the second buck converter branch SD2. In this case, the transfer of the second voltage Vref2to the branches SD1, SD2 is inhibited.

It should be observed that the first SD1 and second SD2 branch both connected to the single coil L1" and to the capacitors C1,C2 are controlled by the digital control signal I2C so that to operate as a high power single phase buck converter.

With reference to each figures 1-3, a preferred embodiment of the control module 20 structure is described.

The control module 20 is an electronic module comprising pass-transistors, particularly, eight pass transistors 1a, 1b, 1c, 1d, 1e, 1f, 1g, 1h each one configured to be activated/deactivated on the basis of a single digital activation signal A, B, C of a group of digital activation signals. In the example, the group of activation signals comprises three signals. Each signal A, B, C can assume a high value (corresponding to logic 1) or a low value (corresponding to logic 0).

Such electronic module 20 comprises a digital decoder 21 connected to the third input terminal IN3 so that to receive the digital control signal I2C as input. On the basis of such control signal I2C, the digital decoder is adapted to generate the above mentioned three digital activation signals A,B,C.

With reference to the pass transistors comprised in the electronic module 20, the first pass-transistor 1a is connected between the second input terminal IN2 of the buck converter integrated chip 10 and a first input I12 of the second core section COR2, particularly, the first input I12 of the second analog module 40'. A second pass-transistor 1b is connected between the first input terminal IN1 of the buck converter integrated chip 10 and the same first input I12 of the second core section COR2.

In addition, the first input terminal IN1 of the buck converter integrated chip 10 is directly connected to a first input I11 of the first core section COR1, particularly to the first analog module 40.

A third pass-transistor 1c is connected between a first output Oil of the first core section COR1, i.e. first output of the first analog module 40, and a first input B1 of a current balancing block 22. Such current balancing block 22 is per se known and is not described in more detail.

A fourth 1d and a fifth 1e pass transistor are in parallel each other and are both connected between the first output O11 of the first core section COR1 and a second input I21 of the first core section COR1. Such input corresponds to the input of the first PWM module 50.

A sixth pass transistor 1f is connected between a first output B2 of the current balancing block 22 and the second input I21 of the first core section COR1.

Moreover, a seventh pass-transistor 1g is connected between a first output O12 of the second analog module 40' included in the second core section COR2 and a second input I22 of the second PWM module 50' of the same core section COR2.

A eighth pass-transistor 1h is connected between a second output B3 of the current balancing block 22 and the second input I22 of the second core section COR2 above mentioned.

Furthermore, the electronic module 20 comprises a multiplexer 23 having a first and a second input both connected to a second output 022 of the second core section COR2, i.e. to the output of the second PWM module 50'. A third input of the multiplexer 23 is connected to a second output 021 of the first core section COR1. A respective output D1 of the multiplexer 23 is connected to a first input of the second power section PWR2. It should be observed that the first, the second and the third inputs of the multiplexer 23 are each activated/deactivated on the basis of a respective digital activation signal A,B,C belonging to the group of digital activation signals generated by the digital decoder 21.

Thanks to the electronic control module 20, the buck converter integrated chip 10 of the buck converter device 100, 200, 300 can be, advantageously, adapted to different configurations assumed by the discrete component electronic circuit 30.

In a first example, for an application which involves height limitations of the discrete components to be used, particularly the coils, and for which the demand of power is around 2.5W, the buck converter device 100 of figure 1 including two single phase buck converters can be used.

In this case, the digital control signal I2C can be set to allow the digital decoder 21 to generate a first digital activation signal A=1 and a second B and third C digital activation signal B=C=0. Therefore, the fist 1a, the fourth 1d and the seventh 1g pass transistors are switched "ON" while the remaining pass transistors are switched "OFF". The first input of the multiplexer 23 is also activated. The current balancing block 22 is maintained switched "OFF" to avoid not required current consumption. With reference to figure 1, the first voltage Vref1 is directly transferred to the first input I11 of the first core section COR1 and the second voltage Vref2 is directly transferred to the first input I12 of the second core section COR2. On the basis of the first voltage Vref1, the first analog module 40 generates an enabling signal to be sent to the first PWM module 50 through the switched-on pass transistors. In this way, the first PWM module 50 generates the first PWM signal to be provided to the first power section PWR1. On the basis of the second voltage Vref2, the second analog module 40' enables the second PWM module 50' to generate the second PWM signal to be provided to the second power section PWR2 through the multiplexer 23. Each buck converter branch SD1, SD2 of the device 100 I suitable to provide the maximum current to its respective load Z.

In a second example, for an application which involves height limitations of the discrete coils to be used, but with sufficient area in the Printed Circuit Board or PCB for the coil allocation, and for which the demand of power is > 2.5W, the buck converter device 200 of figure 2 operating as a multiphase buck converter can be used.

In this case, the digital control signal I2C can be set to allow the digital decoder 21 to generate the second digital activation signal B=1 and the first A and third C digital activation signal A=C=0. Therefore, the second 1b, the third 1c, the sixth 1f and the eighth 1h pass transistors are switched "ON" while the remaining pass transistors are switched "OFF". The second input of the multiplexer 23 is also activated. The current balancing block 22 is maintained switched "ON".

With reference to figure 2, the first voltage Vref1 is directly transferred to the first input I11 of the first core section COR1. On the basis of the first voltage Vref1, the first analog module 40 generates an enabling signal to be sent both to the first PWM module 50 and to the second PWM module 50' of the second core section COR2 through the switched-on pass transistors and the current balancing block 22. In this way, the first PWM module 50 generates the first PWM signal to be provided to the first power section PWR1. The second PWM module 50' provides the second PWM signal to the second power section PWR2 through the multiplexer 23.

The buck converter device 200 has the advantages of other multiphase buck converters, particularly, a reduced ripple in the output current and a faster response to load changes.

In a third example, for an application which involves no height limitations of the discrete coils to be used, but with reduced PCB area for the coil allocation, and for which the demand of power is > 2.5W, the buck converter device 300 of figure 3 operating as a high power single phase buck converter with a single coil L1" can be used.

In this case, the digital control signal I2C can be set to allow the digital decoder 21 to generate the third digital activation signal C=1 and the first A and second B digital activation signal A=B=0. Therefore, only the fifth pass transistor 1e is switched "ON" while the remaining pass transistors are switched "OFF". The third input of the multiplexer 23 is also activated. The current balancing block 22 is maintained switched "OFF" to avoid current consumption.

With reference to figure 3, the first voltage Vref1 is directly transferred to the first input I11 of the first core section COR1. On the basis of such first voltage Vref1, the first analog module 40 generates an enabling signal to be sent to the first PWM module 50 through the switched-on pass transistor 1e. In this way, the first PWM module 50 generates the first PWM signal to be provided both to the first power section PWR1 and to the second power section PWR2 of the second branch SD2. In this case, the second core section COR2 of the buck converter device 300 is maintained switched "OFF" so that to reduce current consumption.

The main advantage of the buck converter device 300 is that of providing a double current capability by using a high profile single coil L1" which has reduced cost.

The present invention, by providing a flexibility on the configuration of the buck converter device, ensures great advantages to final user, particularly in terms of coil component placement, coil selection based on size and performance. The invention, provides big benefits to the silicon maker as well, particularly in term of cost/resource saving.

Of course, in order to satisfy contingent and specific requirements, a person skilled in the art may apply to the above-described buck converter device many modifications and variations, all of which, however, are included within the scope of protection of the invention as defined by the following claims.

## Claims

1. A buck converter device (100; 200; 300) comprising:
- a buck converter integrated chip (10) comprising a first (IN1) and a second (IN2) input terminal adapted to receive a first (Vref1) and a second (Vref2) voltage to be regulated, and a first (OU1) and a second (OU2) output terminal,
- a discrete component electronic circuit (30) interposed between said first (OU1) and second (OU2) output terminal of the buck converter integrated chip and a load (Z), said discrete component electronic circuit (30) assuming at least one operative configuration to provide the load (Z) with said regulated voltage;
said buck converter integrated chip (10) further comprising:
- a first buck converter branch (SD1) comprising a first core section (COR1) and a first power section (PWR1) connected to said first output terminal (OU1);
- a second buck converter branch (SD2) comprising a second core section (COR2) and a second power section (PWR2) connected to said second output terminal (OU2),
**characterized in that**
said buck converter integrated chip (10) further comprises a control module (20) configured to selectively allow/inhibit the transfer of said first (Vref1) and second (Vref2) voltage to the first (SD1) and to the second (SD2) buck converter branch on the basis of the receipt of a control signal (I2C), said control signal (I2C) being indicative of the at least one operative configuration assumed by the discrete component electronic circuit (30).

2. A buck converter device (100) according to claim 1, wherein in a first operative configuration, the discrete component electronic circuit (30) comprises:
- a first coil (L1) connected between said first output terminal (OU1) and a first output node (OUT1) of the device;
- a second coil (L2) connected between said second output terminal (OU2) and a second output node (OUT2) of the device electrically isolated by said first node (OUT1);
said control module (20) being configured, on the basis of the control signal (I2C), to allow the transfer of the first voltage (Vref1) to the first core section (COR1) and the transfer of the second voltage (Vref2) to the second core section (COR2).

3. A buck converter device (200) according to claim 1, wherein in a second operative configuration, the discrete component electronic circuit (30) comprises:
- a first coil (L1') connected between said first output terminal (OU1) and a first output node (OUT1) of the device;
- a second coil (L2') connected between said second output terminal (OU2) and a second output node (OUT2) of the device electrically connected to said first node (OUT1);
said control module (20) being configured, on the basis of the control signal (I2C), to allow the transfer of the first voltage (Vref1) both to the first core section (COR1) and to the second core section (COR2), the transfer of the second voltage (Vref2) being inhibited.

4. A buck converter device (300) according to claim 1, wherein in a third operative configuration, the discrete component electronic circuit (30) comprises:
- a coil (L1") connected between said first output terminal (OU1) and a first output node (OUT1) of the device, the second output terminal (OU2) being electrically connected to the first output terminal (OU1), and a second output node (OUT2) of the device being electrically connected to said first node;
said control module (20) being configured, on the basis of the control signal (I2C), to allow the transfer of the first voltage (Vref1) to the first core section (COR1), such first voltage being also transferred from the first core section (COR1) both to the corresponding first power section (PWR1) and to the second power section (PWR2) of the second buck converter branch (SD2), the transfer of the second voltage (Vref2) being inhibited.

5. A buck converter device (100; 200; 300) according to claim 1, wherein said control module (20) is an electronic module comprising pass-transistors (1a, 1b 1c, ld, 1e, 1f, 1g, lh) each one configured to be activated/deactivated on the basis of a digital activation signal (A,B,C) of a group of digital activation signals.

6. A buck converter device (100; 200; 300) according to claim 5, wherein said electronic module (20) further comprises a digital decoder (21) configured to receive said control signal (I2C) for generating said group of digital activation signals (A,B,C).

7. A buck converter device (100; 200; 300) according to claim 5, wherein:
- a first pass-transistor (1a) is connected between said second input terminal (IN2) of the buck converter integrated chip (10) and a first input (I12) of the second core section (COR2),
- a second pass-transistor (1b) is connected between said first input terminal (IN1) of the buck converter integrated chip (10) and the first input (I12) of the second core section (COR2).

8. A buck converter device (100; 200; 300) according to claim 5, wherein:
- said first input terminal (IN1) of the buck converter integrated chip (10) is directly connected to a first input (I11) of the first core section (COR1),
- a third pass-transistor (1c) is connected between a first output (O11) of the first core section (COR1) and a first input (B1) of a current balancing block (22);
- a fourth (1d) and a fifth (1e) pass transistor are in parallel each other and are both connected between said first output (O11) of the first core section (COR1) and a second input (I21) of the first core section (COR1);
- a sixth pass transistor (1f) is connected between a first output (B2) of the current balancing block (22) and the second input (I21) of the first core section (COR1).

9. A buck converter device (100; 200; 300) according to claim 5, wherein:
- a seventh pass-transistor (1g) is connected between a first output (O12) and a second input (I22) of the second core section (COR2);
- a eighth pass-transistor (1h) is connected between a second output (B3) of the current balancing block (22) and the second input (I22) of the second core section (COR2).

10. A buck converter device (100; 200; 300) according to claim 5, wherein said electronic module (20) comprises a multiplexer (23) having:
- a first and a second input both connected to a second output (022) of the second core section (COR2) and a third input connected to a second output (021) of the first core section (COR1);
- a respective output (D1) connected to a first input of the second power section (PWR2),
said first, second and third inputs being each activated/deactivated on the basis of a respective digital activation signal (A,B,C) of the group of digital activation signals.

11. A power management unit for an application and/or graphic processor, comprising a buck converter device (100; 200; 300) according to any of the previous claims.

12. A digital platform comprising a power management unit according to claim 11.
